# EUROPÄISCHE PATENTSCHRIFT

(11) **EP 0 946 245 B1**
(45) Veröffentlichungstag und Bekanntmachung des Hinweises auf die Patenterteilung: **12.12.2001**
(21) Anmeldenummer: 97941888.6
(22) Anmeldetag: 22.07.1997
(51) Int. Cl.: B01D 29/11, B01D 46/06, B01D 46/42

(54) **VERSCHNAPPTES MITTELROHR**
SNAP-ON CENTRAL PIPE
TUYAU CENTRAL ENCLIQUETE

(30) Priorität: 02.08.1996 DE 19631278
(43) Veröffentlichungstag der Anmeldung: 06.10.1999
(73) Patentinhaber: FILTERWERK MANN & HUMMEL GmbH, 71631 Ludwigsburg (DE)
(72) Erfinder: SOMMER, Bruno, D-71636 Ludwigsburg (DE); LUKA, Helmut, D-70806 Kornwestheim (DE)
(74) Vertreter: Voth, Gerhard, Dipl.-Ing.
(86) Internationale Anmeldenummer: EP9703940
(87) Internationale Veröffentlichungsnummer: WO9805403

(56) Entgegenhaltungen:
- EP-A- 0 685 251
- WO-A-95/25579
- WO-A-98/01212
- DE-A- 2 751 476
- DE-A- 19 507 163
- FR-A- 2 439 936
- US-A- 4 865 738

## Beschreibung

Die Erfindung betrifft ein Stützrohr nach dem Oberbegriff des Patentanspruches 1 sowie ein Filterelement nach dem Oberbegriff des Anspruches 8.

Derartige Stützrohre bzw. Filterelemente sind bekannt, zum Beispiel aus der Deutschen Offenlegungsschrift 37 23 807.

An derartigen Stützrohren bzw. Filterelementen ist nachteilig, daß zur Herstellung derselben eine Vielzahl von unterschiedlichen Elementen notwendig ist, was in der Folge verschiedene Werkzeuge erfordert und das fertige Produkt verteuert.

Man könnte nun ein einteiliges Stützrohr vorsehen, das zur Herstellung lediglich ein Spritzgußwerkzeug erfordert. Dies würde aber zu Problemen bei Fragen der Dichtheit führen.

Die WO 98/01212 (Veröffentlichung : 15.01.98; Priorität:10.07.96) zeigt ein Filtergehäuse, welches aus zwei Teilelementen zusammensetzbar ist, wobei im Verbindungsbereich eine lösbare Verbindung vorgesehen ist. Im Verbindungsbereich wird ein flaches Filtermedium eingelegt, welches durch die Verbindung im Gehäuse fixiert wird. Die beiden rohrförmigen Teilelemente weisen einen Einlass und einen Auslass auf, so dass das Filtermedium von dem zu reinigenden Fluid durchströmt werden kann. Diese Bauform ist jedoch für einen Flachfilter gedacht und deshalb nicht geeignet, zylindrische Filterelemente aufzunehmen.

Es ist somit Aufgabe der Erfindung, ein Stützrohr bzw. ein Filterelement der eingangs genannten Art zu schaffen, das die genannten Nachteile beseitigt und ein Stützrohr bzw. ein Filterelement erzeugt, das einfach gut dichtend und billig herzustellen ist.

Erfindungsgemäß wird die Aufgabe dadurch gelöst, daß das Stützrohr insbesondere aus Kunststoff besteht und aus zwei im wesentlichen identischen Teilelementen zusammensetzbar ist, wobei jedes Teilelement über wenigstens eine Einlaß- und Auslaßöffnung verfügt sowie wenigstens einen radialen und/oder axialen Dichtungsbereich aufweist und über wenigstens einen mit dem anderen Teilelement kommunizierenden Verbindungsbereich verfügt wobei die Verbindung der im wesentlichen identischen Teilelemente im Verbindungsbereich lösbar ist. Durch das Vorsehen von Dichtflächen auf den Teilelementen aus Kunststoff sowie deren Standardisierung sinkt die Anzahl an notwendigen Elementen, so daß deshalb billigere Produkte entstehen.

Eine vorteilhafte Weiterbildung der Erfindung sieht vor, daß der radiale Dichtungsbereich im wesentlichen zylindrisch ausgestaltet ist. Diese zylindrische Ausgestaltung sorgt dafür, daß zum Beispiel ein gleichmäßiges Anliegen durch die konsequente Weiterführung der Stützrohr- geometrie, zum Beispiel des Filterelementes auf dem Stützrohr möglich ist.

Eine andere vorteilhafte Weiterbildung der Erfindung sieht vor, daß der radiale Dichtungsbereich konisch ausgestaltet ist. Dies hat zum Vorteil, daß durch die konische Ausgestaltung bei der Montage des Stützrohres in, zum Beispiel der Filterpatrone aus Papier, eine Zentrierung und ein zwangsweises Anliegen im Dichtungsbereich stattfindet.

In einer weiteren vorteilhaften Ausgestaltung der Erfindung ist vorgesehen, daß die Verbindungsbereiche der beiden Teilelemente als Schnappverbindung ausgestaltet sind. Hierbei erweist sich als besonders günstig, daß kein weiterer Montageaufwand zur Verbindung dieser Teilelemente notwendig ist.

Eine andere vorteilhafte Weiterbildung der Erfindung sieht vor, daß die Verbindungsbereiche der beiden Teilelemente als Rastverbindung ausgestaltet sind. Besonders günstig hierbei ist das Entstehen einer sicheren Verbindung beider Elemente, so daß der Bestand des gesamten Elementes sichergestellt ist.

Eine vorteilhafte Weiterbildung der Erfindung sieht vor, daß die Verbindungsbereiche der beiden Teilelemente als Bajonettverbindung ausgestaltet sind. Ähnlich wie bei der Schnappverbindung ist auch bei dieser Bajonettverbindung kein zusätzlicher Montageaufwand notwendig. Die Bajonettverbindung garantiert für den Fall der Demontage ein kontrolliertes Öffnen der Gesamtverbindung beider Teilelemente.

Eine weitere vorteilhafte Weiterbildung der Erfindung sieht vor, daß die beiden Teilelemente identisch sind, so daß sie in einem einzigen Werkzeug fertigbar sind, was zu Kostenvorteilen führt.

Weiterhin wird die Aufgabe dadurch gelöst, daß in einem Filterelement ein eingangs beschriebenes Stützrohr zum Einsatz kommt. Besonders günstig hierbei ist die Verwendung von einfach und billig herzustellenden Stützrohrelementen, die geeigneterweise aus einem einzigen Werkzeug stammen, die zudem, nach der Montage im Filterelement, in den dafür vorgesehenen Bereichen gleichzeitig eine Dichtungsfunktion übernehmen.

Ein Ausführungsbeispiel der Erfindung und ihrer vorteilhaften Weiterbildungen wird im folgenden unter Bezugnahme auf die beigefügten Zeichnungen näher beschrieben. Es stellen dar:
Figur 1 ein komplettes Filterelement im Schnitt
Figur 2 a eine Ausschnittdarstellung einer Bajonett-Dreh-Schnapp-Verbindung

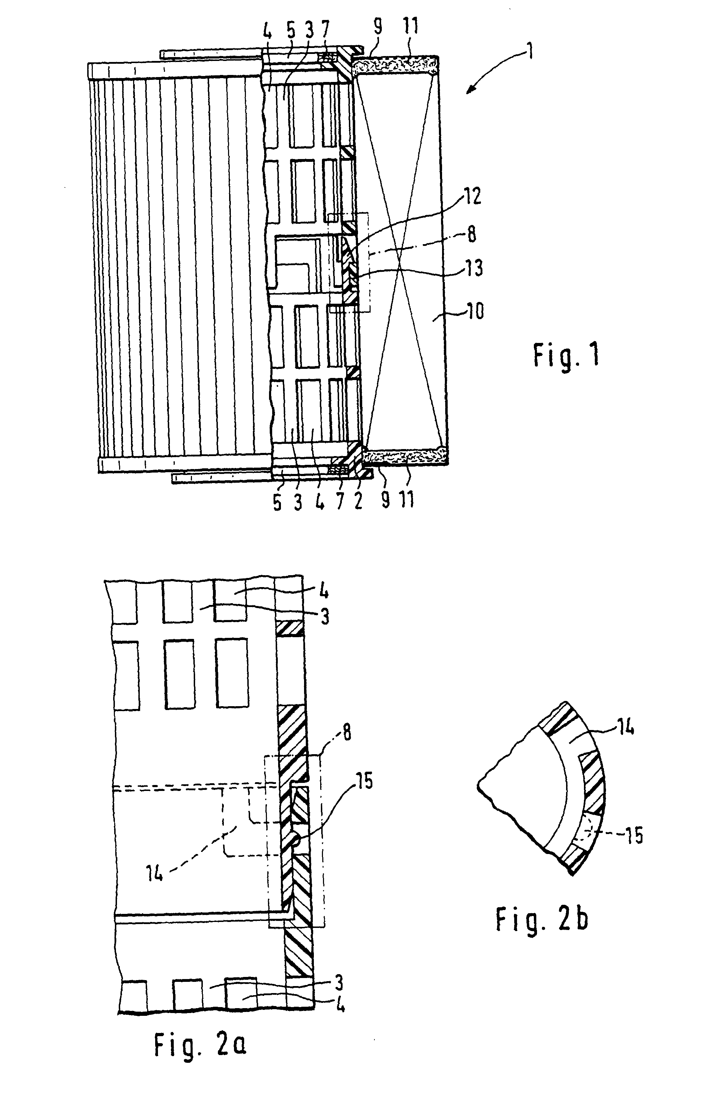

Figur 2 b eine Detaildarstellung aus Fig. 2 a

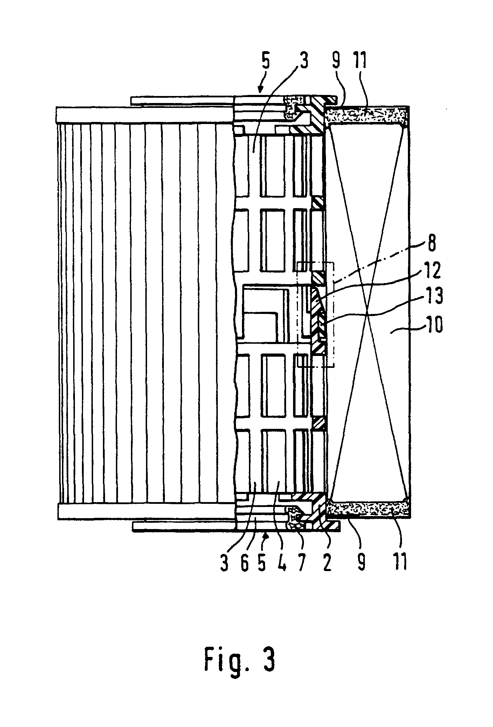

Figur 3 ein komplettes Filterelement aus identischen Teilelementen im Schnitt

Das Filterelement, das in Figur 1 dargestellt wird, besteht aus einem Stützrohr 2 und einem Papierelement 10. Das Stützrohr 2 setzt sich aus zwei Teilelementen 3 zusammen. Jedes dieser Teilelemente verfügt über radial, an dessen Mantelfläche verteilte Einlaßöffnungen 4 sowie über eine Auslaßöffnung 5, so daß der eigentliche Filtrationsvorgang von außen nach innen erfolgt. Im Bereich der Auslaßöffnung 5 befindet sich ein axialer Dichtungsbereich 7, mittels diesem das Stützrohr bzw. das Filterelement 1 die Rein- von der Rohseite trennt.

Alternativ hierzu wäre denkbar, daß der Filtrationsvorgang auch von innen nach außen betrieben werden kann, wobei dann aus der Einlaß- die Auslaßöffnung werden würde und umgekehrt. Das Papierelement 10, das über einen Papierelementabschluß 11 verfügt, weist in diesem Ausführungsbeispiel, das demontierbar ist, eine in den Papierelementabschluß eingelegte Dichtung 9 auf. Beide Elemente, Papierelementabschluß 11 und Dichtung 9 haben Dichtungsfunktion, um die Rein- von der Rohseite zu trennen. Die beiden Teilelemente 3 werden derart eingesetzt, daß das Papierelement 10 nicht gestaucht wird. Auf diese Art entsteht in radialen Dichtungsbereichen zwischen den Teilelementen 3, die das Stützrohr 2 bilden, eine zuverlässige radiale Dichtung zwischen Stützrohr 2 und Papierelement 10. An den Endseiten der Teilelemente 3 befindet sich ein axialer Dichtungsbereich 7, der als axiale Scheibendichtung ausgeführt sein kann. Im Verbindungsbereich 8 der beiden Teilelemente 3 weist, zum Beispiel ein Teilelement 3 vier Schnappzungen 12 auf, das andere Teilelement 3 die korrespondierenden Rastvorsprünge 13. Bei der Montage des gesamten Filterelements 1 schnappen dann die Schnappzungen 12 in die zugehörigen Rastvorsprünge 13 des anderen Teilelements 3 ein.

In einer Variante weist jedes der Teilelemente 3 über z. B. je zwei Schnappzungen und zwei Rastvorsprünge auf, wie dies in Figur 1 dargestellt wird, so daß die Teilelemente absolut identisch sind und mittels eines einzigen Werkzeug zu fertigen sind.

In einem Ausführungsbeispiel wie es in Figur 2 a dargestellt ist, verfügt jedes Teilelement 3, das an seiner Mantelfläche verteilt Einlaßöffnungen 4 aufweist, im Verbindungsbereich 8 über wenigstens je eine Führungskulisse 14 eines Bajonettverschlußes sowie wenigstens je einen Führungszapfen eines Bajonettverschlußes. Die Führungskulisse 14 des einen Teilelementes 3 kommuniziert mit dem Führungszapfen 15 des anderen Teilelementes 3 in der Weise, daß eine lösbare Dreh-Schnapp-Verbindung zustande kommt. Die Figur 2 b stellt die Bajonettverbindung mit Führungskulisse 14 und Führungszapfen 15 aus Figur 2 a im Detail dar.

Jedes der Teilelemente 3 verfügt über z. B. je zwei Schnappzungen 12 und zwei Rastvorsprünge 13, wie dies in Figur 3 dargestellt wird, so daß die Teilelemente absolut identisch sind und mittels eines einzigen Werkzeug zu fertigen sind. Das in

Figur 3 dargestellte Filterelement besteht aus einem Stützrohr 2 und einem Papierelement 10. Das Stützrohr 2 setzt sich aus zwei Teilelementen 3 zusammen. Jedes dieser Teilelemente verfügt über radial, an dessen Mantelfläche verteilte Einlaßöffnungen 4 sowie über eine Auslaßöffnung 5, so daß der eigentliche Filtrationsvorgang von außen nach innen erfolgt. Im Bereich der Auslaßöffnung 5 befindet sich ein Dichtungsbereich 6, 7, mittels diesem das Stützrohr bzw. das Filterelement 1 die Rein- von der Rohseite trennt. Alternativ hierzu wäre denkbar, daß der Filtrationsvorgang auch von innen nach außen betrieben werden kann, wobei dann aus der Einlaß- die Auslaßöffnung werden würde und umgekehrt. Das Papierelement 10, das über einen Papierelementabschluß 11 verfügt, weist in diesem Ausführungsbeispiel, das demontierbar ist, eine in den Papierelementabschluß eingelegte Dichtung 9 auf. Beide Elemente, Papierelementabschluß 11 und Dichtung 9 haben Dichtungsfunktion, um die Reinvon der Rohseite zu trennen. Die beiden Teilelemente 3 werden derart eingesetzt, daß das Papierelement 10 nicht gestaucht wird. Auf diese Art entsteht in radialen Dichtungsbereichen zwischen den Teilelementen 3, die das Stützrohr 2 bilden, eine zuverlässige radiale Dichtung zwischen Stützrohr 2 und Papierelement 10. An den Endseiten der Teilelemente 3 befindet sich sowohl ein axialer Dichtungsbereich 7, als auch ein radialer Dichtungsbereich 6, der als Lippendichtung ausgeführt ist.

## Patentansprüche (Patentansprüche für folgende(n) Vertragsstaat(en): ES, FR, GB, IT)

1. Stützrohr, insbesondere aus Kunststoff, wobei das Stützrohr (2) aus zwei im wesentlichen identischen Teilelementen (3) zusammensetzbar ist, wobei jedes Teilelement (3) über wenigstens eine Einlaß- (4) und Auslaßöffnung (5) verfügt sowie wenigstens einen radialen (6) und / oder achsialen Dichtungsbereich (7) aufweist und über wenigstens ein mit dem anderen Teilelement kommunizierenden Verbindungsbereich (8) verfügt, **dadurch gekennzeichnet, daß** die Verbindung der im wesentlichen identischen Teilelemente (3) im Verbindungsbereich (8) lösbar ist.

2. Stützrohr nach Anspruch 1, **dadurch gekennzeichnet, daß** der radiale Dichtungsbereich (6) im wesentlichen zylindrisch ausgestaltet ist.

3. Stützrohr nach Anspruch 1, **dadurch gekennzeichnet, daß** der radiale Dichtungsbereich (6) konisch ausgestaltet ist.

4. Stützrohr nach einem oder mehreren der vorgenannten Ansprüche, **dadurch gekennzeichnet, daß** die Verbindungsbereiche der beiden Teilelemente (3) als Schnappverbindung ausgestaltet sind.

5. Stützrohr nach einem oder mehreren der vorgenannten Ansprüche, **dadurch gekennzeichnet, daß** die Verbindungsbereiche der beiden Teilelemente (3) als Rastverbindung ausgestaltet sind.

6. Stützrohr nach einem oder mehreren der vorgenannten Ansprüche, **dadurch gekennzeichnet, daß** die Verbindungsbereiche der beiden Teilelemente als Bajonettverbindung ausgestaltet sind.

7. Stützrohr nach einem oder mehreren der vorgenannten Ansprüche, **dadurch gekennzeichnet, daß** die beiden Teilelemente identisch sind, so daß sie in einem Werkzeug fertigbar sind.

8. Filterelement, **dadurch gekennzeichnet, daß** ein Stützrohr nach einem oder mehreren der vorgenannten Ansprüche zum Einsatz kommt.

## Patentansprüche (Patentansprüche für folgende(n) Vertragsstaat(en): DE)

1. Stützrohr, insbesondere aus Kunststoff, wobei das Stützrohr (2) aus zwei im wesentlichen identischen Teilelementen (3) zusammensetzbar ist, wobei jedes Teilelement (3) über wenigstens eine Einlass- (4) und Auslassöffnung (5) verfügt und wobei eine der Öffnungen (4:5) an der Mantelfläche des Stützrohres vorgesehen ist, sowie wenigstens einen radialen (6) und/oder axialen Dichtungsbereich (7) aufweist und über wenigstens einen mit dem anderen Teilelement kommunizierenden Verbindungsbereich (8) verfügt, wobei die Verbindung der im wesentlichen identischen Teilelemente (3) im Verbindungsbereich (8) lösbar ist.

2. Stützrohr nach Anspruch 1, **dadurch gekennzeichnet, daß** der radiale Dichtungsbereich (6) im wesentlichen zylindrisch ausgestaltet ist.

3. Stützrohr nach Anspruch 1, **dadurch gekennzeichnet, daß** der radiale Dichtungsbereich (6) konisch ausgestaltet ist.

4. Stützrohr nach einem oder mehreren der vorgenannten Ansprüche, **dadurch gekennzeichnet, daß** die Verbindungsbereiche der beiden Teilelemente (3) als Schnappverbindung ausgestaltet sind.

5. Stützrohr nach einem oder mehreren der vorgenannten Ansprüche, **dadurch gekennzeichnet, daß** die Verbindungsbereiche der beiden Teilelemente (3) als Rastverbindung ausgestaltet sind.

6. Stützrohr nach einem oder mehreren der vorgenannten Ansprüche, **dadurch gekennzeichnet, daß** die Verbindungsbereiche der beiden Teilelemente als Bajonettverbindung ausgestaltet sind.

7. Stützrohr nach einem oder mehreren der vorgenannten Ansprüche, **dadurch gekennzeichnet, daß** die beiden Teilelemente identisch sind, so daß sie in einem Werkzeug fertigbar sind.

8. Filterelement, **dadurch gekennzeichnet, daß** ein Stützrohr nach einem oder mehreren der vorgenannten Ansprüche zum Einsatz kommt.

## Claims (Claims for the following Contracting State(s): ES, FR, GB, IT)

1. Supporting pipe, more especially formed from plastics material, the supporting pipe (2) being comprisable of two substantially identical partial elements (3), each partial element (3) having at least one inlet aperture (4) and outlet aperture (5), as well as including at least one radial sealing region (6) and/or axial sealing region (7) and having at least one connecting region (8), which communicates with the other partial element, **characterised in that** the connection between the substantially identical partial elements (3) is releasable in the connecting region (8).

2. Supporting pipe according to claim 1, **characterised in that** the radial sealing region (6) has a substantially cylindrical configuration.

3. Supporting pipe according to claim 1, **characterised in that** the radial sealing region (6) has a conical configuration.

4. Supporting pipe according to one or more of the above-mentioned claims, **characterised in that** the connecting regions of the two partial elements (3) are configured as a snap-fitting connection.

5. Supporting pipe according to one or more of the above-mentioned claims, **characterised in that** the connecting regions of the two partial elements (3) are configured as a locking connection.

6. Supporting pipe according to one or more of the above-mentioned claims, **characterised in that** the connecting regions of the two partial elements are configured as a bayonet joint.

7. Supporting pipe according to one or more of the above-mentioned claims, **characterised in that** the two partial elements are identical, so that they can be manufactured in one tool.

8. Filter element, **characterised in that** a supporting pipe according to one or more of the above-mentioned claims is used.

## Claims (Claims for the following Contracting State(s): DE)

1. Supporting pipe, more especially formed from plastics material, the supporting pipe (2) being comprisable of two substantially identical partial elements (3), each partial element (3) having at least one inlet aperture (4) and outlet aperture (5), as well as including at least one radial sealing region (6) and/or axial sealing region (7) and having at least one connecting region (8), which communicates with the other partial element, **characterised in that** the connection between the substantially identical partial elements (3) is releasable in the connecting region (8).

2. Supporting pipe according to claim 1, **characterised in that** the radial sealing region (6) has a substantially cylindrical configuration.

3. Supporting pipe according to claim 1, **characterised in that** the radial sealing region (6) has a conical configuration.

4. Supporting pipe according to one or more of the above-mentioned claims, **characterised in that** the connecting regions of the two partial elements (3) are configured as a snap-fitting connection.

5. Supporting pipe according to one or more of the above-mentioned claims, **characterised in that** the connecting regions of the two partial elements (3) are configured as a locking connection.

6. Supporting pipe according to one or more of the above-mentioned claims, **characterised in that** the connecting regions of the two partial elements are configured as a bayonet joint.

7. Supporting pipe according to one or more of the above-mentioned claims, **characterised in that** the two partial elements are identical, so that they can be manufactured in one tool.

8. Filter element, **characterised in that** a supporting pipe according to one or more of the above-mentioned claims is used.

## Revendications (Revendications pour l'(les) Etat(s) contractant(s) suivant(s): ES, FR, GB, IT)

1. Tube de support notamment en matière plastique, ce tube de support (2) étant composé de deux éléments (3), essentiellement identiques, chaque élément (3) ayant au moins un orifice d'entrée (4) et un orifice de sortie (5) ainsi qu'au moins une zone d'étanchéité radiale (6) et/ou axiale (7), et disposant d'au moins une zone de liaison (8) communiquant avec l'autre élément, **caractérisé en ce que** la liaison des éléments (3) essentiellement identiques est amovible dans la zone de liaison (8).

2. Tube de support selon la revendication 1,
**caractérisé en ce que**
la zone d'étanchéité radiale (6) est de forme essentiellement cylindrique.

3. Tube de support selon la revendication 1,
**caractérisé en ce que**
la zone d'étanchéité radiale (6) est conique.

4. Tube de support selon l'une ou plusieurs des revendications précédentes,
**caractérisé en ce que**
les zones de liaison des deux éléments (3) forment une liaison encliquetée.

5. Tube de support selon l'une ou plusieurs des revendications précédentes,
**caractérisé en ce que**
les zones de liaison des deux éléments (3) forment une liaison enclipsée.

6. Tube de support selon l'une ou plusieurs des revendications précédentes,
**caractérisé en ce que**
les zones de liaison des deux éléments forment une liaison de type baïonnette.

7. Tube de support selon l'une ou plusieurs des revendications précédentes,
**caractérisé en ce que**
les deux éléments partiels sont identiques et sont fabriqués avec un même outil.

8. Elément de filtre,
**caractérisé en ce qu'**
il comporte un tube de support selon une ou plusieurs des revendications précédentes.

## Revendications (Revendications pour l'(les) Etat(s) contractant(s) suivant(s): DE)

1. Tube de support notamment en matière plastique, le tube de support (2) étant composé de deux éléments (3), essentiellement identiques, chaque élément (3) ayant au moins un orifice d'entrée (4) et un orifice de sortie (5) ainsi qu'au moins une zone d'étanchéité radiale (6) et/ou axiale (7), et disposant d'au moins une zone de liaison (8) communiquant avec l'autre élément, la liaison des éléments (3) essentiellement identiques est amovible dans la zone de liaison (8).

2. Tube de support selon la revendication 1,
**caractérisé en ce que**
la zone d'étanchéité radiale (6) est de forme essentiellement cylindrique.

3. Tube de support selon la revendication 1,
**caractérisé en ce que**
la zone d'étanchéité radiale (6) est conique.

4. Tube de support selon l'une ou plusieurs des revendications précédentes,
**caractérisé en ce que**
les zones de liaison des deux éléments (3) forment une liaison encliquetée.

5. Tube de support selon l'une ou plusieurs des revendications précédentes,
**caractérisé en ce que**
les zones de liaison des deux éléments (3) forment une liaison enclipsée.

6. Tube de support selon l'une ou plusieurs des revendications précédentes,
**caractérisé en ce que**
les zones de liaison des deux éléments forment une liaison de type baïonnette.

7. Tube de support selon l'une ou plusieurs des revendications précédentes,
**caractérisé en ce que**
les deux éléments partiels sont identiques et sont fabriqués avec un même outil.

8. Elément de filtre,
**caractérisé en ce qu'**
il comporte un tube de support selon une ou plusieurs des revendications précédentes.
